Europäisches Patentamt

European Patent Office

Office européen des brevets

(19)

(11) **EP 0 850 679 B1**

(12) **EUROPEAN PATENT SPECIFICATION**

(45) Date of publication and mention
of the grant of the patent:
**30.03.2005 Bulletin 2005/13**

(51) Int Cl.[7]: **B01D 71/02**, B01J 35/02

(21) Application number: **97122945.5**

(22) Date of filing: **29.12.1997**

(54) **Solid electrolyte membrane with mechanically-enhancing constituent**

Feste Elektrolytmembran mit einem Bestandteil zur Verbesserung der mechanischen Eigenschaften

Membrane électrolytique solide comprenant un constituant pour l'amélioration des propriétés mécaniques

(84) Designated Contracting States:
**BE DE ES FR GB IT NL**

(30) Priority: **31.12.1996 US 775683**
**02.05.1997 US 850672**

(43) Date of publication of application:
**01.07.1998 Bulletin 1998/27**

(73) Proprietor: **PRAXAIR TECHNOLOGY, INC.**
**Danbury, CT 06810-5113 (US)**

(72) Inventors:
• **Chen, Chieh Cheng**
**Getzville, New York 14068 (US)**
• **Prasad, Ravi**
**East Amherst, New York 14051 (US)**
• **Gottzman, Christian Friedrich**
**Clarence, New York 14031 (US)**

(74) Representative: **Schwan, Gerhard, Dipl.-Ing.**
**Schwan Schwan Schorer**
**Patentanwälte**
**Bauerstrasse 22**
**80796 München (DE)**

(56) References cited:
EP-A- 0 663 232        WO-A-92/00934
US-A- 5 616 223        US-A- 5 624 542

• **OE K -I ET AL: "Toughening of ionic conductive zirconia ceramics utilizing a non -linear effect" SOLID STATE IONICS, vol. 1-2, no. 91, 1 October 1996, page 131-136 XP004071614**
• **BAMBA N ET AL: "Fabrication and mechanical properties of nanosized SiC particulate reinforced yttria stabilized zirconia composites" NANOSTRUCTURED MATERIALS, vol. 1-8, no. 9, 1997, page 497-500 XP004065183**
• **VAN DE GOOR G ET AL: "Electrically conductive ceramic composites" SOLID STATE IONICS, vol. 2002, no. 101-103, November 1997, page 1163-1170 XP004103752**

EP 0 850 679 B1

**Description**

FIELD OF THE INVENTION

This invention relates to compositions of solid electrolyte ion transport membranes and more particularly to such membranes having one or more constituents which enhance mechanical properties, catalytic properties and/or sintering behavior of the membranes.

BACKGROUND OF THE INVENTION

Solid electrolyte ion transport membranes have significant potential for the separation of oxygen from gas streams containing oxygen. Of particular interest are mixed conductor materials that conduct both oxygen ions and electrons and which can hence be operated in a pressure driven mode without the use of external electrodes. Composite ceramic mixed conductor membranes comprised of multi-phase mixtures of an electronically-conductive material and an oxygen ion conductive material are disclosed by T. J. Mazanec et al. in U.S. Patent No. 5,306,411 for electrochemical reactors and partial oxidation reactions. M. Liu et al. disclose in U.S. Patent No. 5,478,444 composite mixed conductor materials containing oxygen-ion-conducting materials such as bismuth oxide and electronically conductive materials. True mixed conductors, exemplified by perovskites such as $La_{.2}Sr_{.8}CoO_x$, $La_{.2}Sr_{.8}FeO_x$, $La_{.2}Sr_{.8}Fe_{.8}Co_{.1}Cr_{.1}O_x$ and others, are materials that possess intrinsic conductivity for both electrons and ions. Some of these materials possess among the highest oxygen ion conductivity known and also rapid surface exchange kinetics.

Although there is great potential for these materials in gas separation applications, there are some drawbacks in their use. A common problem of most ceramics is their fragility and low mechanical strength in tension which makes it difficult to fabricate large elements such as tubes and deploy them in high reliability commercial systems.

Yamamoto et al. reported the microcracking in sintered $LaCoO_x$ in Perovskite-Type Oxides as Oxygen Electrodes for High Temperature Oxide Fuel Cells, Solid State Ionics 22:241-46 (1987). Such microcracks are probably related to structural transformations during sintering and frequently occur in perovskites. The vacancy concentration in many ion transport membrane materials such as perovskites is a function of the oxygen partial pressure in the gas surrounding it. Since the unit cell size is dependent on the vacancy concentration, in many ion transport membrane materials the volume of the unit cell increase as $P_{O2}$ is reduced. For example, in perovskites the size of the unit cell $ABO_3$ increases as the partial pressure of oxygen on the anode or permeate side is reduced. The change in unit cell size gives rise to a compositional coefficient of expansion in addition to the thermal coefficient of expansion. Compositional gradients in the materials hence give rise to mechanical stress which could result in failure. This often necessitates close control of atmosphere during startup, shutdown operation or processing.

B. Fu et al. reported in $(Y_{1-x}Ca_x)$ $FeO_3$: A Potential Cathode Material for Solid Oxide Fuel Cells, Proc. 3rd Intl. Symp. on Solid Oxide Fuel Cells, S.C. Singhal, Ed., The Electrochem. Soc. Vol. 93-4: 276-282 (1993) that microcracking was a problem in $Y_{1-x}(Sr$ or $Ca)_xMnO_3$ perovskites due to either a high temperature polymorphic symmetry change, or a highly anisotropic thermal expansion coefficients of the system. Efforts made to circumvent this problem were unsuccessful. They found that high Sr or Ca doping levels (x > 0.3) can reduce the microcracking, but resulted in poor performance for fuel cell cathode applications, apparently due to inferior physical properties including reduced ionic conductivities.

Because of the difficulties described above, the manufacture of perovskite tubes has required complex, carefully controlled process steps sometimes involving a sophisticated, controlled atmosphere sintering process. This increases the cost and complexity of fabrication and could result in problems during transient operation of the manufactured elements involving temperature, atmospheric or compositional changes.

It is highly desirable to minimize the sensitivity of the ion transport membrane to the ambient atmosphere. Also, many of these materials have very high thermal expansion coefficient (for example, $La_{1-x}Sr_xCoO_3$ is approximately $20 \times 10^{-6}$ /°C ), which gives rise to high thermal stress during the processing and operation, hence often results in the failure of materials.

In summary, the use of the composite mixed conductors in the prior art is mostly confined to materials comprising multi-phase mixtures of oxygen ion conductors and electronic conductors. The primary objective in the prior art was to introduce electronic conductivity into the ionic conductor. In general, this requires the electronically conductive second phase to be present in greater than 30% to 35% by volume when randomly distributed to enable operation above the percolation limit.

Shen et al. state in column 6 of each of U.S. Patent Nos. 5,616,223 and 5,624,542 that in one system silver obtains a continuous phase at about 20 to about 35 volume percent while silver/palladium alloys require "slightly higher amounts". Shen et al. prefer having the electronic conducting phase present in about 1 to 5 percent greater amounts to obtain high ambipolar conductivity. The '542 patent describes ceramic/metallic materials having a predominantly electronic conducting metal phase providing enhanced mechanical properties compared to a predominantly ionic conducting ceramic phase alone.

Composite bulk superconducting materials have been synthesized to achieve desirable physical properties and high $T_c$ superconducting characteristics. Wong et al. in U.S. Patent No. 5,470,821 describe composite bulk superconducting materials with continuous superconducting ceramic and elemental metal matrices. The elemental metal is situated within the interstices between the crystalline grains to increase transport current density.

Oxygen transport is driven by the partial pressure of the oxygen in the gas streams. The Nernst potential is developed internally, and drives the flux of oxygen vacancies against the ionic resistance of the electrolyte as disclosed in commonly assigned U.S. Patent No. 5,547,494 by Prasad et al. entitled "Staged Electrolyte Membrane".

Generally, thin electrolyte films are desirable because the ideal oxygen flux is inversely proportional to their thickness. Thus, thinner films lead to higher oxygen fluxes, reduced area, lower operating temperatures and lower oxygen pressure differentials across the electrolytes. Also, when the anode-side of the membrane is purged with a reactive gas, such as methane or hydrogen, the oxygen activity on the anode side reduces significantly, thus leading to higher oxygen flux across the membrane. However, as the oxygen flux increases, the surface resistance to transport become more pronounced and ultimately dominate the overall resistance to transport. Surface resistance arise from various mechanisms involved in converting an oxygen molecule in the gas phase to oxygen ions in the crystal lattice and vice versa. Even for dense ion transport membranes, surface kinetics on the cathode or the anode side may limit the oxygen flux across the membrane.

Yasutake Teraoka et al. reported solid state gas separation membranes formed by depositing a dense mixed conducting oxide layer onto a porous mixed conducting support in Jour. Ceram. Soc. Japan. International Ed., Vol.97, No.4, pp.458-462 and No.5, pp.523-529 (1989). The relatively thick porous mixed conducting support provides mechanical stability for the thin, relatively fragile dense mixed conducting layers. Considering the thickness of the dense layer, the authors therein expected the oxygen flux to increase by a factor of ten for the composite thin film membrane as compared to dense mixed conducting disk. However, they obtained an increase in oxygen flux of less than a factor of two using the thin film membrane.

U.S. Patent No. 4,791,079 discloses catalytic ceramic membranes consisting of two layers, an impervious mixed ion and electronic conducting ceramic layer and a porous catalyst-containing ion conducting ceramic layer. The preferred composition for the porous ceramic layer is zirconia stabilized with approximately 8 to 15 mole percent calcia, yttria, scandia, magnesia, and/or mixtures thereof.

U.S. Patent No. 5,240,480 discloses multi-layer composite solid state membranes, comprising a multicomponent metallic oxide porous layer and dense layer, which are capable of separating oxygen from oxygen-containing gaseous mixtures at elevated temperature.

U.S. Patent No. 5,569,633 discloses surface catalyzed multi-layer ceramic membranes consisting of a dense mixed conducting multicomponent metallic oxide layer, and a catalyzed metal or metal oxide coating on the feed (air) side to enhance the oxygen flux. Catalytic coating on both sides did not enhance the oxygen flux.

A solid electrolyte ion transport membrane according to the preamble of claim 1 is know from WO 92/00934 A2, wherein the membrane comprises an ion conducting ceramic phase and a continuous , ordered, ductile, metallic array which is embedded in and surrounded by said ceramic phase.

OBJECTS OF THE INVENTION

It is therefore an object of the invention to provide an improved solid electrolyte ion transport membrane having enhanced mechanical properties.

It is a further object of this invention to provide such a membrane which minimizes microcracks during its fabrication.

Yet another object of this invention is to provide such a membrane which does not require a special atmosphere during its processing or operation.

A still further object of this invention is to provide such a membrane which adapts to changes in temperature and atmosphere.

It is also an object of the invention to provide solid electrolyte ion transport membrane that substantially decreases limitations imposed by the surface kinetics and/or chemical kinetics to obtain high oxygen flux.

It is a further object of this invention to provide such a membrane having a modified surface which has an improved catalytic effect on the membrane.

SUMMARY OF THE INVENTION

This invention comprises a solid electrolyte ion transport membrane as defined in claim 1.

In a preferred embodiment the matrix material is a mixed conductor which exhibits both electronic and oxygen ion conductivity. The constituent is preferably a metal such as silver, palladium, or a mixture thereof.

One embodiment of the invention also comprises a solid electrolyte ion transport membrane composite for separating a gaseous species from a gaseous mixture in which the composite has a dense matrix material and a porous coating. The porous coating is disposed on at least one of the first and second surfaces of the membrane to enhance the rate of surface reactions involving the gaseous species.

As used herein, the term "dual phase" refers to the combination of a phase which conducts at least one type of ion, and a phase comprising the constituent.

As used herein, the term "ion transport material" is interchangeable with "matrix material".

BRIEF DESCRIPTION OF THE DRAWINGS

Other objects, features and advantages will occur to those skilled in the art from the following description of preferred embodiments and the accompanying drawings, in which:

Fig. 1a through 1d are enlarged photographs of membranes having different amounts of constituents according to the present invention;
Fig. 2 is a graph of the fracture strengths of the four membranes shown in Figs. 1a through 1d;
Fig. 3 is a graph of X-Ray Diffraction results for the membranes of Figs. 1a and 1d;
Fig. 4 is a graph of oxygen transport at different temperatures for the membranes of Figs 1a and 1d;
Fig. 5 is a chart of oxygen flux at different reactive purge levels for the membranes of Figs. 1a and 1d;
Fig. 6a is a scanning electron micrograph of another membrane according to the present invention;
Fig. 6b is a surface energy dispersed spectrum of the membrane shown in Fig. 6a;
Fig. 7 is an enlarged cross-sectional view of a dense solid electrolyte ion transport membrane having a porous crystalline layer coating to enhance surface reactions according to the present invention; and
Fig. 8 is an enlarged cross-sectional view of a solid electrolyte ion transport membrane composite having a porous crystalline layer coating on both sides of the dense membrane to enhance surface reactions, and in which one of the porous coatings is disposed on a porous support for enhancing the mechanical strength of the composite.

DETAILED DESCRIPTION OF THE INVENTION

The invention relates to a multi-phase, composite material comprised preferably of a first mixed conductor phase such as a perovskite and a second constituent phase which can prevent microcracking during fabrication, eliminate special atmospheric control during processing and operation, and improve the mechanical properties, thermal cyclability, atmosphere cyclability and/or surface exchange rates over that of the mixed conductor phase alone.

The invention introduces a suitable second constituent phase into the mixed conductor to establish a composition with improved mechanical properties, and preferably with improved catalytic properties, without sacrificing its oxygen transport performance. This second phase can relieve compositional and other stresses generated during sintering, inhibit the propagation of microcracks in the mixed conductor phase and hence improve the mechanical properties (especially tensile strength) significantly. Since atmosphere control can be eliminated during sintering, it is easier and less costly to scale up manufacturing. The ability to eliminate atmosphere control during thermal cycling makes it substantially easier to deploy the membranes in practical systems which are more robust with respect to variation in temperature or gas composition.

One embodiment of the invention is a solid electrolyte ion transport membrane composite having a dense membrane and a porous coating for separating a gaseous component from a gaseous mixture. The porous coating is deposited on at least one of the first and second surfaces of the membrane to enhance the rate of surface reactions involving the gaseous species

The invention introduces a porous coating onto a multiphase dense solid electrolyte ion transport membrane to establish a composition with improved catalytic properties by enhancing the surface kinetic exchange to the dense membrane. The porous coaling provides a significantly enhanced catalytic activity or surface exchange rate over the dense electrolyte transport membrane alone.

The porous coating layer is deposited on the reactive surface of the dense membrane. For the purpose of illustration, when purging the anode side of the composite membrane according to the present invention using a methane containing gas, the surface reaction rate of methane can be greatly increased by affording greater surface area to the membrane surface. This is particularly true for depositing the porous layer on the anode side of the membrane, as the rate limiting step generally reside on the anode side of the membrane when methane is the reacting component of the purge gas. There may be certain chemical reactions in which the rate limiting step reside on the cathode side of the membrane. In such a case, the porous coating is deposited on at least the cathode side.

As a preferred embodiment, the coating is deposited on the surfaces of both the anode and cathode side. This is particularly preferred because of the ease in manufacturing dual-coated dense membranes.

Depositing a coating layer onto both sides of the dense matrix material balances the coatings to prevent or reduce the possible effects of mechanical stress on the membrane surface. When cured, the porous coating layer may produce mechanical stress on one side of the dense matrix material if the coating occurs only on one side. Accordingly, it is preferred to deposit a coating layer on both sides of the dense matrix material to reduce unbalanced stress as a result of the coating.

Dense membranes of mixed conducting oxides that transport oxide ions have an infinite oxygen/nitrogen selectivity. Examples of such materials are given in Table I below and include several oxides with a perovskite structure or a structure that can be derived from that such as $A_2B_2O_5$, a brownmillerite. A common problem of such ceramic membranes is their fragility and low mechanical strength in tension which makes it difficult to fabricate large elements such as tubes and use them in high reliability commercial systems. These limitations are overcome in the present invention using a dual phase material comprised of a mixed conductor such as a perovskite and a suitable second constituent phase such as a metal to prevent the microcracking during fabrication in air, improve the mechanical properties, enhance thermal/atmosphere cyclability and possibly yield surface exchange rates over that of mixed conductor phase alone.

Suitable ion transport membrane materials include ionic only and mixed conductors that can transport oxygen ions. As used according to the present invention, the ion transport materials comprising the first phase preferably transport both oxygen ions and electrons independent of the presence of the second constituent phase. A more comprehensive description of first phase materials to which a second constituent phase may be added according to the present invention is provided below the Examples.

In other embodiments, suitable ion transport membrane materials include mixed conductors that can transport oxygen ions. As used according to the present invention, the mixed conductor phase may transport both oxygen ions and electrons independent of the presence of the second electronic conducting phase. Examples of mixed conducting solid electrolytes of this invention are provided in Table I below, but this invention is not limited solely to these material compositions listed therein. Dense matrix materials other than those comprised only of mixed conductors are also contemplated by this invention.

Table I:

| Mixed Conducting Solid Electrolytes | |
|---|---|
| | **Material composition** |
| 1. | $(La_{1-x}Sr_x)(Co_{1-y}Fe_y) O_{3-\delta}$ ($0\leq x\leq 1$, $0\leq y \leq 1$, $\delta$ from stoichimetry) |
| 2. | $SrMnO_{3-\delta}$ <br><br> $SrMn_{1-x}Co_xO_{3-\delta}$ ($0\leq x\leq 1$, $0 \leq y \leq 1$, $\delta$ from stoichimetry) <br><br> $Sr_{1-x}Na_xMnO_{3-\delta}$ |
| 3. | $BaFe_{0.5}Co_{05}YO_3$ <br><br> $SrCeO_3$ <br><br> $YBa_2Cu_3O_{7-\beta}$ ($0\leq\beta\leq 1$, $\beta$ from stoichimetry) |
| 4. | $La_{02}Ba_{0.8}Co_{08}Fe_{02}O_{26}$;     $Pr_{02}Ba_{08}Co_{08}Fe_{0.2}O_{26}$ |
| 5. | $A_xA'_{x'}A''_{x''}B_yB'_{y'}B''_{y''}O_{3-z}$ (x, x', x", y. y', y" all in 0-1 range) <br><br> where: A, A', A" = from groups 1, 2, 3 and f-block lanthanides <br><br>      B, B', B" = from d-block transition metals |

Table I: (continued)

| Mixed Conducting Solid Electrolytes | | | |
|---|---|---|---|
| **Material composition** | | | |
| 6. | (a) Co-La-Bi type: | Cobalt oxide | 15.75 mole % |
| | | Lanthanum oxide | 13-45 mole % |
| | | Bismuth oxide | 17-50 mole % |
| | (b) Co-Sr-Ce type: | Cobalt oxide | 15-40 mole % |
| | | Strontium oxide | 40-55 mole % |
| | | Cerium oxide | 15-40 mole % |
| | (c) Co-Sr-Bi type: | Cobalt oxide | 10-40 mole % |
| | | Strontium oxide | 5-50 mole % |
| | | Bismuth oxide | 35-70 mole % |
| | (d) Co-La-Ce type: | Cobalt oxide | 10-40 mole % |
| | | Lanthanum oxide | 10-40 mole % |
| | | Cerium oxide | 30-70 mole % |
| | (e) Co-La-Sr-Bi type: | Cobalt oxide | 15-70 mole % |
| | | Lanthanum oxide | 1-40 mole % |
| | | Strontium oxide | 1-40 mole % |
| | | Bismuth oxide | 25-50 mole % |
| | (f) Co-La-Sr-Ce type: | Cobalt oxide | 10-40 mole % |
| | | Lanthanum oxide | 1-35 mole % |
| | | Strontium oxide | 1-35 mole % |
| | | Cerium oxide | 30-70 mole % |
| 7. | $Bi_{2-x-y}M'_xM_yO_{3-\delta}$ ($0 \leq x \leq 1$, $0 \leq y \leq 1$, $\delta$ from stoichimetry)<br><br>where: M' = Er, Y, Tm, Yb, Tb. Lu, Nd, Sm, Dy, Sr, Hf. Th, Ta, Nb,<br><br>       Pb, Sn. In, Ca, Sr, La and mixtures thereof<br><br>M = Mn Fe, Co, Ni, Cu and mixtures thereof | | |
| 8. | $BaCe_{1-x}Gd_xO_{3-x/2}$ where,<br><br>    x equals from zero to about 1. | | |
| 9. | One of the materials of $A_sA'_tB_uB'_vB''_wO_x$ family whose composition is<br><br>disclosed in U.S. Patent 5,306,411 (Mazanec *et al.*) as follows:<br><br>    A represents a lanthanide or Y, or a mixture thereof<br><br>    A' represents an alkaline earth metal or a mixture thereof,<br><br>    B represents Fe;<br><br>    B' represents Cr or Ti, or a mixture thereof<br><br>    B'' represents Mn, Co, V, Ni or Cu, or a mixture thereof;<br><br>and s, t, u, v, w, and x are numbers such that:<br><br>    s/t equals from about 0.01 to about 100;<br><br>    u equals from about 0.01 to about 1;<br><br>    v equals from zero to about 1; | | |

Table I: (continued)

| Mixed Conducting Solid Electrolytes | |
| --- | --- |
| **Material composition** | |
| | w equals from zero to about 1;<br><br>x equals a number that satisfies the valences of the A, A', B, B', B'' in the formula; and $0.9 < (s+t)/(u+v+w) < 1.1$ |
| 10. | One of the materials of $La_{1-x}Sr_xCu_{1-y}M_yO_{3-d}$ family, where:<br><br>M represents Fe or Co;<br><br>x equals from zero to about 1;<br><br>y equals from zero to about 1;<br><br>d equals a number that satisfies the valences of La, Sr, Cu, and M in the formula. |
| 11. | One of the materials of $Ce_{1-x}A_xO_{2-d}$ family, where:<br><br>A represents a lanthanide, Ru, or Y; or a mixture thereof;<br><br>x equals from zero to about 1;<br><br>y equals from zero to about I;<br><br>d equals a number that satisfies the valences of Ce and A in the formula. |
| 12. | One of the materials of $Sr_{1-x}Bi_xFeO_{3-d}$ family, where:<br><br>A represents a lanthanide or Y, or a mixture thereof;<br><br>x equals from zero to about 1;<br><br>y equals from zero to about 1;<br><br>d equals a number that satisfies the valences of Ce and A in the formula. |
| 13. | One of the materials of $Sr_xFe_yCo_zO_w$ family, where:<br><br>x equals from zero to about 1;<br><br>y equals from zero to about 1;<br><br>z equals from zero to about 1;<br><br>w equals a number that satisfies the valences of Sr, Fe and Co in the formula. |
| 14. | Dual phase mixed conductors (electronic/ionic):<br><br>$(Pd)_{0.5}/(YSZ)_{0.5}$<br><br>$(Pt)_{05}/YSZ)_{0.5}$<br><br>$(B\text{-}MgLaCrO_x)_{0.5}(YSZ)_{0.5}$<br><br>$(In_{90\%}Pt_{10\%})_{06}/(YSZ)_{0.5}$<br><br>$(In_{90\%}Pt_{10\%})_{0\,5}/(YSZ)_{0.5}$<br><br>$(In_{95\%}Pr_{2.5\%}Zr_{2.5\%})_{05}/(YSZ)_{05}$<br><br>Any of the materials described in 1-13, to which a high temperature metallic<br><br>phase (e.g., Pd, Pt, Ag, Au, Ti, Ta, W) is added. |

In general, the major considerations in the selection of the second, constituent phase materials are: (1) thermal expansion coefficient (TEC) match between second phase and the ion transport material; (2) chemical compatibility between second phase and the ion transport material; (3) good bonding between she second phase and the matrix of the ion transport material; (4) the ductility of the second phase to release the stresses during sintering and cooling; and (5) low cost. TEC match is important because stress is usually set up within and around the second phase as the composite material cools down from the fabrication. Selection of an incorrect second phase material may cause possible delamination or cracking by the thermal stress induced during fabrication and operation. This can be minimized by reducing the difference in the two expansion coefficients between the ion transport material and the second phase. The ion transport material is described as a matrix material and the second phase as a constituent.

Chemical compatibility is important because the high temperature operation and processing of ion transport materials will cause interactions and interdiffusion between the ion transport material and the second phase that may lead to the degradation of the materials and reduce the membrane performance. Therefore, the second phase should be chemically inert towards or should not react undesirably with the ion transport material to prevent adverse interactions and interdiffusion at high temperatures.

Good bonding is important because delaminations occurring between the second phase and the ion transport material could be deleterious to the strength of the material. Cracks or flaws could easily link up and cause a failure of the material

Ductility of the second, constituent phase is important because many ion transport materials have very high thermal expansion coefficient. High TEC's give rise to high thermal stress during the processing and operation of the ion transport materials, which may result in failure of the materials. The ductility of the second phase may release the stresses generated during sintering and/or cooling.

In addition to the above considerations, the catalytic activity of the second phase preferably improves surface reaction kinetics of the composite ion transport membranes. Increased catalytic activity therefore may mitigate an otherwise higher cost for a given constituent or electronic conducting phase.

The constituent phase according to the present invention is not electronically continuous across the ion transport membrane. Randomly distributed electronically conductive constituents are less than thirty percent by volume to ensure that such constituents are present in a manner below the percolation limit of electrons across the membrane.

The second, constituent phase can be chosen from metals, such as silver, palladium, platinum, gold, rhodium, titanium, nickel, ruthenium, tungsten, tantalum, or alloys of two or more of such metals which are stable at membrane operating temperatures. Suitable high-temperature alloys include inconel, hastelloy, monel, and ducrolloy. Silver, palladium, or silver/palladium alloy are preferred. The second phase can be also chosen from ceramics, such as praseodymium-indium oxide mixture, niobium-titanium oxide mixture, titanium oxide, nickel oxide, tungsten oxide, tantalum oxide, ceria, zirconia, magnesia, or a mixture thereof. Some ceramic second phases, such as titanium oxide or nickel oxide, can be introduced in the form of oxides, then reduced to metal during the operation under a reduction atmosphere.

The invention will now be described in detail with respect to a composite ion transport membrane containing a mixed conducting $La_{.2}Sr_{.8}Fe_{.69}Co_{.1}Cr_{.2}Mg_{.01}O_x$ and a silver/palladium alloy second phase.

Example 1 - Mechanically Enhanced Ion Transport Membrane of $La_{.2}Sr_{.8}Fe_{.69}Co_{.1}Cr_{.2}Mg_{.01}O_x$ and 50Ag/50Pd alloy

Mechanically enhanced ion transport materials were prepared by mixing various weight ratios (5, 10, and 20 wt%) of a Ag/Pd alloy 50% Ag and 50% Pd by weight, hereinafter 50Ag/50Pd, available from Degussa Corp., South Plainfield, NJ, and $La_{.2}Sr_{.8}Fe_{.69}Co_{.1}Cr_{.2}Mg_{.01}O_x$ mixed conductor powder from SSC, Inc., Woodinville, WA, now PSC of Praxair Surface Technologies, Inc., using a Spex mixer (Spex Industries, Inc., Edison, NJ), for 15-20 mins. The powders were then added into a 2-propanol solution containing 3 wt% of PVB (Butvar of Monsanto, St. Louis, MO), and mixed by a magnetic stirrer at 80°C to evaporate the 2-propanol, then sieved through a mesh size of 74 microns before pressing. Mechanically enhanced membrane discs were prepared using a 1.5" die under a pressure of 10.4 kpsi followed by binder burn-out (1°C/min from 25 to 400°C and hold for 1 hour), and sintered at 1250°C for 2 hours with a heating/cooling rate of 2°C/min in air.

Microstructures of the sintered discs were examined by using an optical microscope and scanning electron microscope (SEM) with energy dispersed spectroscopy (EDS) for the chemical compositions analysis. X-ray diffraction (XRD) analysis were performed using a Rigaku miniflex diffractometer with Cu $K_\alpha$ radiation for the compatibility study of the second phase with the ion transport matrix. The mechanical strength was measured at room temperature by a 3-point bending test with a span of 19 mm and a cross-head speed of 0.5 mm/min using an Instron tensile testing machine. Samples (30 x 4 x 3 mm) were prepared by dry uni-axial pressing followed by cold isostatic pressing at 30 kpsi, then sintered at 1250°C for 2 hours. All specimens were cut and polished using synthetic diamond discs prior testing to avoid any edge imperfections. The tests were performed on five specimens for each compositions. The oxygen permeation rate was measured using sintered disc specimens sealed in an alumina test cell with gold pastes. Permeations were performed at the temperature of 900 - 1000°C with He inert gas purge and different reactive purge gases. A HP 5890 Gas Chromatography, oxygen analyzer and moisture analyzer were used to analyze the gas compositions and calculate the oxygen fluxes.

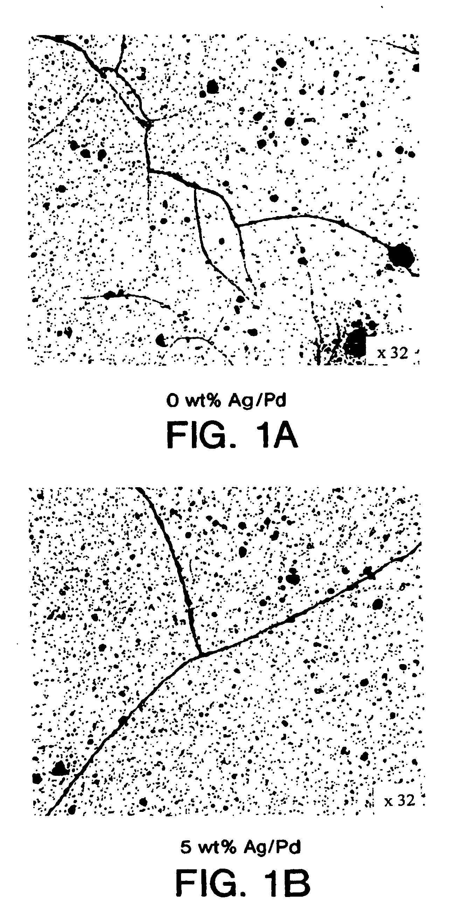

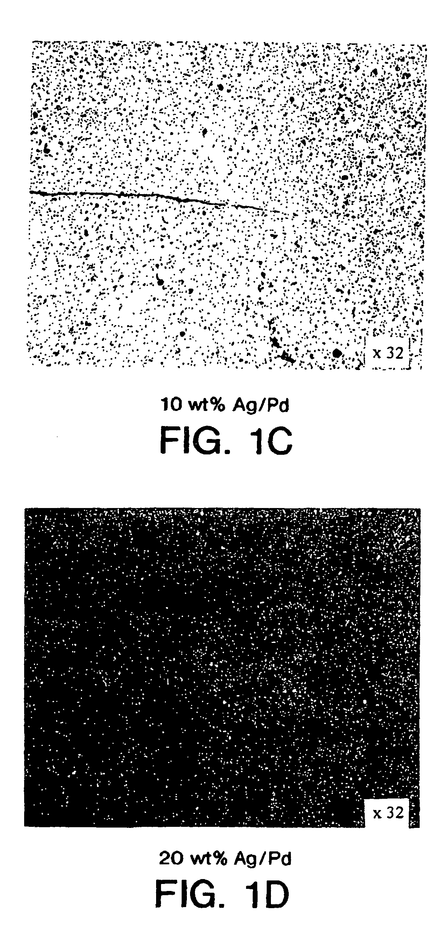

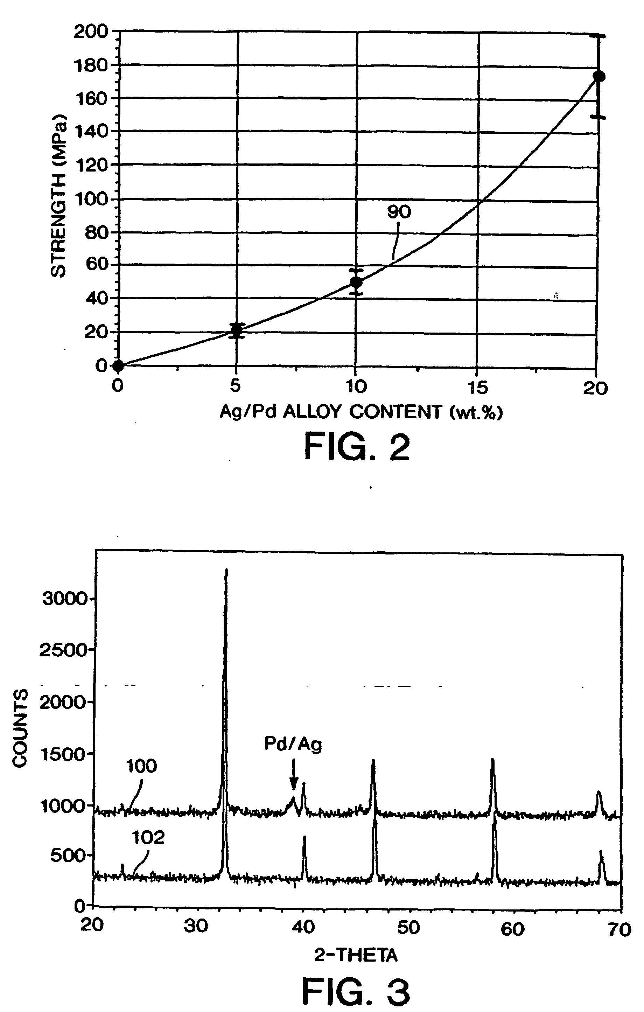

The objective of the mechanically enhanced ion transport material is to increase the mechanical strength of the ion transport matrix and possibly eliminate the need for a nitrogen atmosphere during sintering. Our initial results show that the second phase (Ag/Pd alloy) can relieve compositional and other stresses generated during sintering, inhibit the propagation of micro-cracks in the mixed conductor phase and hence improve the mechanical strength of the ion transport material disc. Fig. 1 shows the crack density of the sintered ion transport material disc can be greatly reduced by increasing the amount of the second phase. The effect of the second phase concentration on the fracture strength of the ion transport material by 3-point bending tests is shown as curve 90 in Fig. 2. The results show the fracture strength of the ion transport materials dramatically increase from 0 to 175 (MPa) as the second phase increase from 0 to 20 wt%. Use of the Ag/Pd alloy, appears to significantly reduce the crack density and increase the mechanical strength of the ion transport disc. This is believed to be due to the metallic phase reducing compositional stresses during sintering as well as arresting crack growth, hence the mechanical strength of dual phase ion transport disks were enhanced. The XRD results shown in Fig. 3 also demonstrate a good compatibility between the 20% Ag/Pd alloy, spectrum 100, and $La_{.2}Sr_{.8}Fe_{.69}Co_{.1}Cr_{.2}Mg_{.01}O_x$, spectrum 102, without any additional phase being detected at after sintering at $1250°C$.

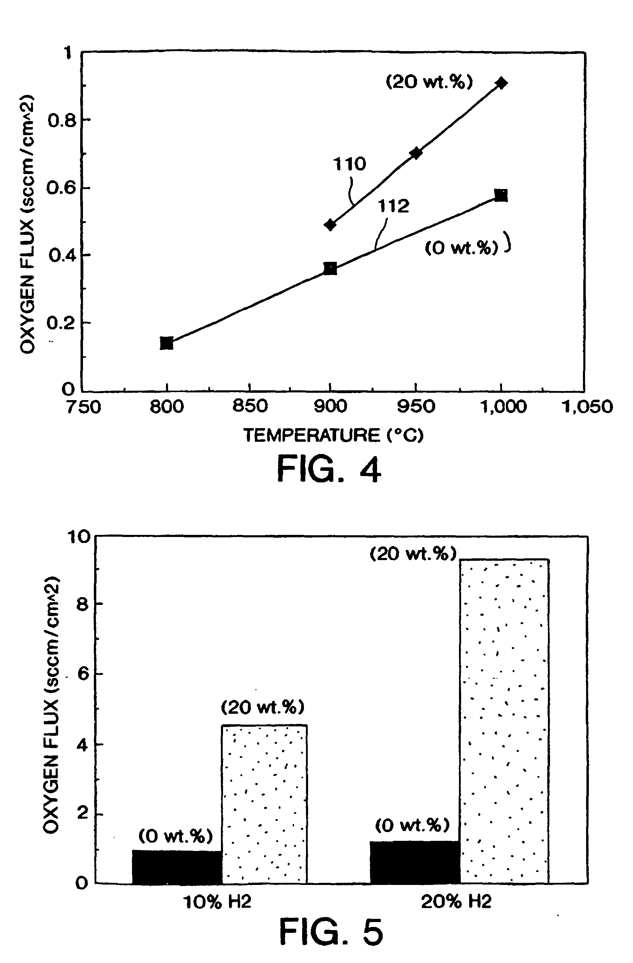

Oxygen transport tests were performed on a 0.85 mm disc at temperature of 900-1000°C under an air/helium gradient with flow rates of 500 sccm (standard cubic centimeters per minute) for each stream at 1.2 atm pressure. The $O_2$ fluxes are 0.5, 0.7, 0.9 $sccm/cm^2$ at 900, 950, 997°C, respectively, curve 110, with the activation energy of 1.0 eV which is comparable to those obtained for single phase specimen, curve 112, as shown in Fig. 4. Therefore, the use of the second phase does not appear to diminish the oxygen transport performance of the material.

Tests of these dual phase discs were also performed at 1000°C by using different concentrations of $H_2$ (10 and 20%)/$N_2$ mixtures on the purge side. As the $H_2$ concentration of the reactive side of was raised from 10% to 20%, the $O_2$ flux increased from 4.6 to 9.4 $sccm/cm^2$. As compared to the single phase tube tests, the dual phase disc also shows higher oxygen fluxes under identical reactive purge conditions, as shown in Fig. 5. This is believed to be due to the enhancement of surface oxidation kinetics due to the catalytic properties of the second phase.

Example II - Mechanically Enhanced Ion Transport Membrane of $La_{.2}Sr_{.8}Fe_{.69}CO_{.1}Cr_{.2}Mg_{.01}O_x$ and 65Ag/35Pd alloy

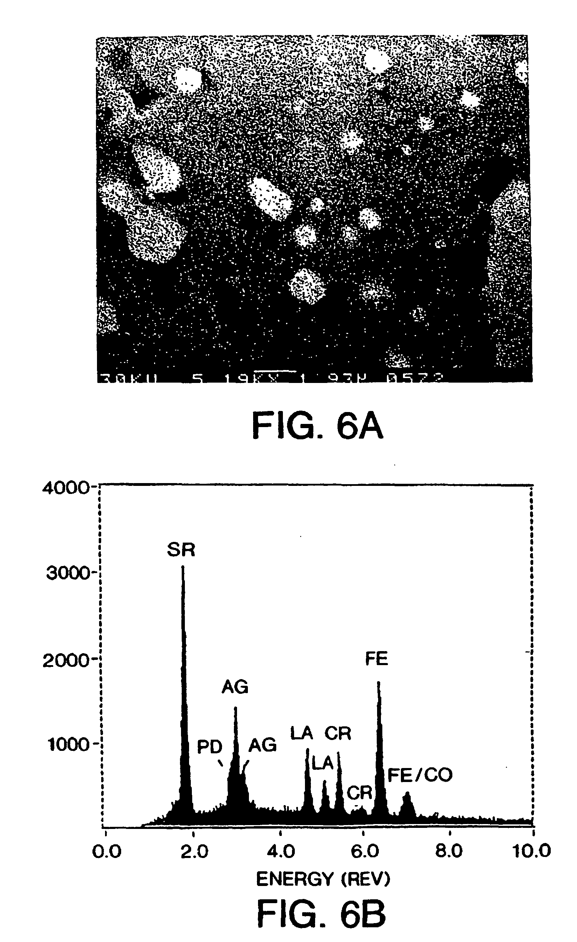

A dense dual phase disc of $La_{.2}Sr_{.8}Fe_{.69}Co_{.1}Cr_{.2}Mg_{.01}O_x$ with 20% 65Ag/35Pd (65 wt% Ag and 35 wt% Pd) was prepared according to the method of Example I except that 65Ag/35Pd is substituted for 50Ag/50Pd as a second phase. Room temperature $N_2$ permeation test confirmed that the disc is gas-tight. The scanning electron micrograph (Fig. 6a) shows at 5180x magnification a well dispersed second phase in the $La_{.2}Sr_{.8}Fe_{.69}Co_{.1}Cr_{.2}Mg_{.01}O_x$, matrix and reveals neither delaminations nor any additional phase formation indicating the good compatibility between the Ion Transport Membrane and the second phase. Surface EDS (energy dispersed spectroscopy) spectrum (Fig. 6b) of the specimen also shows minimal compositional losses of the matrix as well as the second phase after sintering. The Pd to Ag ratio of the second phase after sintering (0.548) is close to that of the 65Ag/35Pd alloy (0.538) within the accuracy of the instrument. The disc also showed good mechanical strength after sintering at 1200°C *in air* with no microcracks being observed. Oxygen transport test was performed on a 0.9 mm disc at temperature of 1000°C under an air/helium gradient. The $O_2$ flux was 0.8 $sccm/cm^2$ at 1000°C which is comparable to that of dual phase specimen in Example I (with 20 wt% of 50Pd/50Ag second phase). The reactive purge test of this disc was also performed at 1000°C by using 10%$H_2$-90%$N_2$ mixture on the purge side. An $O_2$ fluxes of 4.5 $sccm/cm^2$ was obtained at 1000°C which is also comparable to that of dual phase specimen with 20 wt% of 50Pd/50Ag alloy.

Example III - Mechanically Enhanced Ion Transport Membrane of $La_{.2}Sr_{.8}Fe_{.69}Co_{.1}Cr_{.2}Mg_{.01}O_x$ and 90Ag/10Pd alloy

Dense dual phase discs of $La_{.2}Sr_{.8}Fe_{.69}Co_{.1}Cr_{.2}Mg_{.01}O_x$ with 20 wt% 90Ag/10Pd were prepared according to the method of Example 1 except that 90Ag/10Pd (supplied by Praxair Surface Technologies, Inc.) was substituted for 50Ag/50Pd as a second phase. The discs and bars were prepared by dry pressing under a pressure of 10.4 kpsi followed by binder burn-out (1°C/min from 25 to 400°C and hold for 1 hour), and sintered at 1200°C for 1 hour with a heating/cooling rate of 2°C/min in air. Although there was no microcracks observed in these specimens, they showed lower mechanical strengths (with an average of 135 Mpa) as compared to those of dual phase specimens with 20 wt% of 50Pd/50Ag alloy. This may be due to a lower tensile strength of 90Ag/10Pd alloy as compared to that of 50Pd/50Ag alloy. Oxygen transport tests were performed on extruded tubes (10 cm long, 1 cm I.D., 1 mm wall thickness after sintering) at temperature of approximately 1000°C under reactive purge tests using variety of purge gases. The $O_2$ fluxes are slightly lower ($\sim$10-15%) than those of dual phase tubes with 50Pd/50Ag alloy under similar testing conditions. An $O_2$ flux of 2.2 $sccm/cm^2$ at 1025°C was obtained with purge-gas containing 60% $CH_4$ for these tubes.

Referring to suitable first phase materials more generally, microcracking is often present in a $ABO_3$ perovskite structure, or a structure that can be derived from that (e.g. brownmillerite, $A_2B_2O_5$), as a result of a phase transition during the sintering and cooling. The microcracks are reduced in the $La_{.2}Sr_{.8}Fe_{.69}Co_{.1}Cr_{.2}Mg_{.01}O_x$ perovskite by adding the various amount of Ag/Pd second phase as shown in Example I and II. The invention disclosed herein is intended to cover suitable mixed conducting oxides presented by the structure $A_rA'_sA''_tB_uB'_vB''_wO_x$ where A,A',A'' are chosen from the Groups 1, 2, 3 and the F block lanthanides; and B,B',B' are chosen from the D block transition metals according to the Periodic Table of the Elements adopted by the IUPAC wherein $0<r\leq1$, $0\leq s\leq1$, $0\leq t\leq1$, $0<u\leq1$, $0\leq v\leq1$, $0\leq w\leq1$, and x is a number which renders the compound charge neutral. Preferably, A,A' or A'' of the enumerated structure is a Group 2 metal selected from the group consisting of magnesium, calcium, strontium and barium. Preferred mixed conducting oxides are presented by the formula: $A_sA'_tB_uB'_vB''_wO_x$ wherein A represents a lanthanide, Y, or mixture thereof, A' represents an alkaline earth metal or mixture thereof; B represents Fe; B' represents Cr, Ti, or mixture thereof and B'' represents Mn, Co, V, Ni, Cu or mixture thereof and s, t, u, v and w each represents a number from 0 to about 1.

Suitable first phase materials also include other ion-conducting ceramics in which microcracks may occur during sintering due to a high temperature polymorphic symmetry change, a compositional stress or a highly anisotropic thermal expansion coefficient. For example, zirconia exhibits phase transformations at 1170°C (monoclinic to tetragonal) and 2370°C (tetragonal to cubic). The high temperature polymorphic symmetry changes usually result in cracks during sintering. Therefore, zirconia is usually stabilized in the fluorite-type cubic phase by introducing an appropriate di- or trivalent oxide to obtain the cubic symmetry. The invention herein is also intended to cover mechanical enhancement of other ceramics such as zirconia or ceria if they encounter a high temperature polymorphic symmetry change, a compositional stress or a highly anisotropic thermal expansion coefficient. Further, an electronic/ionic conductor such as $(B-MgLaCrO)_{0.5}(YSZ)_{0.5}$, or a primarily ionic conductor such as zirconia or ceria combined with a perovskite, may be further combined with a constituent according to the present invention to form a membrane having at least three phases.

Alternative embodiments of this invention are directed to coating a dense membrane by depositing the porous coating on at least one surface of the membrane. The coating modifies the surface of the membrane, thus believed to provide a catalytic effect during ion transport as well as providing structural stability on the surface layer.

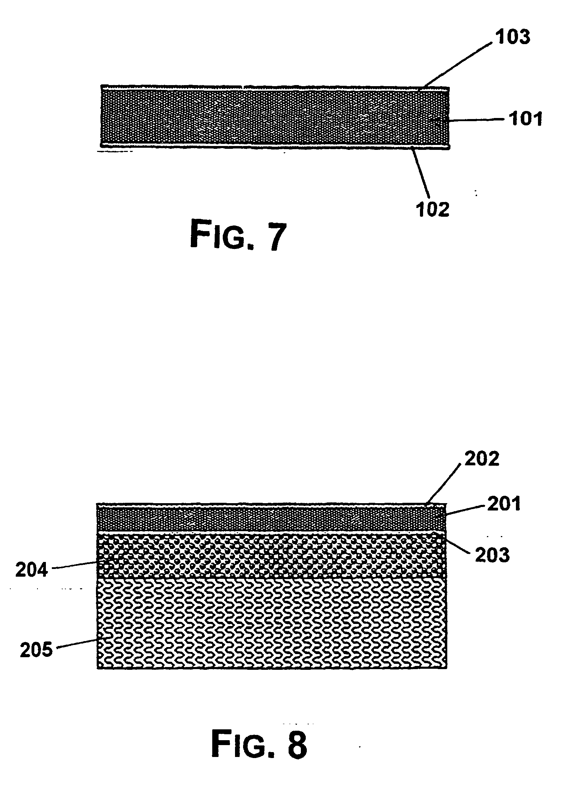

The drawings are representative of certain embodiments of the solid electrolyte ion transport membrane composite of this invention. **Fig.7** shows porous coating layers **702** and **703** deposited on both surfaces of dense solid electrolyte ion conducting membrane **701.** Fig. 8 shows another embodiment in which porous coating layers **802** and **803** are deposited on both surfaces of dense solid electrolyte ion conducting membrane **801.** Membrane **801** is supported on a porous support comprising intermediate support layer **804** and support layer **805,** with porous coating layer **803** between membrane **801** and intermediate support layer **804**.

Although numerous techniques for depositing a layer of material onto a dense surface are available, one preferred manufacturing process comprises dipping the dense membrane into a liquid precursor of the porous coating (e.g., slurry, colloidal solution), and subsequently drying and curing the resulting coating layer. This method is a comparatively easier and more cost effective method for depositing a porous coating layer onto a dense surface over other methods available in the art.

Suitable ion transport membrane materials include mixed conductors that can transport oxygen ions. As used according to the present invention, the mixed conductor phase may transport both oxygen ions and electrons independent of the presence of the second electronic conducting phase. Examples of mixed conducting solid electrolytes of this invention are provided in Table I above, but this invention is not limited solely to these material compositions listed therein. Dense matrix materials other than those comprised only of mixed conductors are also contemplated by this invention.

Suitable coating compositions may comprise of mixed conducting oxides that transport oxide ion as well as electron conductivity. Examples of the porous coating mixed conductor are given in Table I above, and may be the same or different from the mixed conducting oxides of the dense membrane. As in the dense membrane, the coating may comprise a composition having a mixed conductor phase and a coating constituent.

Suitable porous coating compositions include a combination of a mixed conductor and a coating constituent that can transport oxygen ions and/or electrons. The mixed conductors may transport both oxygen ions and conduct electrons independent of the presence of the coating constituent. It is preferred that the coating constituent constitute less than about thirty percent by volume of the total porous coating.

The porous coating may be coated using various methods known to the skilled artisan. A preferred method is the slurry dip coating procedure. This method is preferred because of the ease and cost efficiency of coating the dense membrane. Other methods may include spin coating, chemical vapor deposition (CVD), electrochemical vapor deposition (EVD), physical vapor deposition (PVD) such as laser ablation and sputtering, thermal spray, plasma spray, RF plasma deposition and a combination thereof.

The layer of porous coating should be thin relative to the surface of the dense membrane, such that the coating enhances the rate of surface reaction of the dense membrane. Accordingly, the porous coating layer has a thickness of less than about 50 microns, preferably less than 10 microns, and more preferably less than 5 microns.

A more comprehensive description of the porous coating according to the present invention is provided in the examples below.

In another embodiment, a porous support can also be used to enhance the structural stability of the membrane. The porous support may include inert, ionic conducting, mixed conducting and electronic conducting (metallic) material, or a combination thereof. Additionally, the porous support may contain catalytically enhancing constituents in combination with any of the inert, ionic conducting, mixed conducting and electronic conducting material, or a combination thereof. The porous support is particularly important where the dense matrix material is thin and fragile. Structurally, it is preferable to have at least one of the dense membrane and the porous coating being deposited on the porous support. An example of this embodiment is found in Fig. 8 as described above.

Example 4

Example 4 does not relate to the invention. A single-phase dense $La_{.2}Sr_{.8}Fe_{.69}CO_{.1}Cr_{.2}Mg_{.01}O_x$ ("LSFCCM") powder (SSC) solid electrolyte ion conducting tube (7.1 mm ID, 9.7 mm OD, and approximately 15 cm long) was extruded, then sintered at 1250°C in nitrogen for 1 hour with a heating/cooling rate of 2°C/min. To test oxygen permeation across the tube, the following procedure was used: a purge gas (containing 60% $CH_4$, 10% $CO_2$ and 30% inert gas such as $N_2$ or Ar bubbled through water) flowed inside the tubes countercurrent to the feed gas. A thermocouple located halfway down the ion transport membrane tube monitored the temperature of the purge gas flowing through the tube, which is referred to as "ion transport temperature" in this discussion. Oxygen in the feed gas was partly removed by permeation across the ion transport membrane, and an oxygen-lean product was obtained. Feed $O_2$ volume fraction ($x_F$), product $O_2$ volume fraction ($x_p$), and product volumetric flow rate ('P' sccm) were measured and the feed volumetric flow (F) used in the permeation test was computed by the following mass balance on nonpermeating species: $P.(1-x_p) = F.(1-x_F)$ . $O_2$ flux across the ion transport tubes was then computed using the following equation:

$$O_2\text{-flux}= (F.x_F-P.x_p)/A_{\text{ion transport}}$$

where, $A_{\text{ion transport}}$ = average ion transport tube area across which $O_2$ is transported ($cm^2$)

Example 5

Example 5 does not relate to the invention. A single-phase dense LSFCCM solid electrolyte ion conducting tube similar to that of Example 4 was prepared. The tube was coated with a slurry dip coating procedure via Chemat Technology Model 201 to deploy a porous layer of approximately 1 μm size granules of a single-phase LSFCCM ion transport material on both surfaces of the tube.

The coated material was then tested under the same manner as that described in Example 4. Enhancement of $O_2$ flux across the ion transport membrane with the aid of a porous coating is illustrated by the following table based on the experimental data. In the experiments performed under similar conditions, the coated ion transport tube showed a substantially higher $O_2$ flux (4 times) than the uncoated ion transport tube. In this case, data points with similar feed flow rates are shown. The coated single-phase tube was observed to remove more oxygen from similar feed-streams.

Note that the feed $O_2$ volume fraction used in the coated tube tests was slightly higher than the uncoated tube tests. However, according to Wagner's theory, the $O_2$-flux depends on the logarithm of the feed $O_2$ volume fraction: thus a change from 20.9 volume % to 22.6 volume % of $O_2$ in the feed stream is not expected to significantly affect the average flux reported in the following table.

Table II

| Results for single-phase ion transport tube | | | | | | |
|---|---|---|---|---|---|---|
| Tube area ($cm^2$) | $O_2$ in feed | O2 in prod. | Calc. feed flow (sccm) | Prod. flow (sccm) | ion transport temp. (°C) | Avg. Flux (sccm/$cm^2$) |
| Uncoated single-phase ion transport tube (Example 4): | | | | | | |
| 38.5 | 20.9% | 17.41% | 329 | 315 | 1,001 | 0.4 |
| Single-phase ion transport tube with a 20mm porous coating of 1mm single-phase ion transport granules (Example 5): | | | | | | |
| 37.6 | 22.6% | 0.50% | 322 | 205 | 1,021 | 1.6 |

Example 6

A dual-phase ion transport tube of LSFCCM with 20 wt% 50Ag/50Pd (50 wt.% Ag and 50 wt.% Pd) was made by slip casting. Dual phase LSFCCM ion transport membrane slip was prepared by mixing 20 wt% of the 50Ag/50Pd alloy (DeGussa) and $La_{.2}Sr_{.8}Fe_{.69}CO_{.1}Cr_{.2}Mg_{.01}O_x$ powder (SSC) and 2 drops Darvan C dispersant with water to a 35% solids concentration. The slip was milled for 5 hours, slipcast in a gypsum mold, then sintered at 1250°C in air for 1 hour with a heating/cooling rate of 2°C/min. The dual-phase tubes was tested in the same manner as that described in Example 4.

### Example 7

Example 7 presents another embodiment of the present invention. A dual-phase LSFCCM ion transport tube similar to that of Example 6 was prepared. The tube was coated using a slurry dip coating procedure via Chemat Technology Model 201 was used to deploy a porous layer of approximately 1 μm size granules of a single-phase LSFCCM ion transport material on both surfaces of one of the tubes, whereas the the tube from Eample 6 was left uncoated. Substantial $O_2$-flux enhancement (3.8 times) was observed with the porous single-phase ion transport layer deployed on the tubes. In this example, data points with similar product $O_2$ concentrations were chosen. A much higher feed flow could be used in the coated dual-phase tube to remove $O_2$ to a comparable extent.

### Example 8

Example 8 presents yet another embodiment of the present invention. An extruded dual-phase LSFCCM ion transport tube similar to that of Example 4 was prepared. The tube was coated using a slurry dip coating procedure via Chemat Technology Model 201 was used to deploy a porous layer of approximately 1 μm size granules of a dual phase LSFCCM ion transport material comprising LSFCCM and a constituent on both surfaces of one of the tubes. The constituent is made from 50Ag/50Pd and is about 20 wt.% (approximately 11 vol.%) of the entire porous layer. Substantial $O_2$-flux enhancement (3.7 times) was observed with the porous single-phase ion transport layer deployed on the tubes. In this example, data points with similar product $O_2$ concentrations were chosen. A much higher feed flow could be used in the coated dual-phase tube to remove $O_2$ to a comparable extent. It is also shown that substantial enhancement in $O_2$ product, feed flow and product flow can be attained.

Table III

| Tube area (cm$^2$) | $O_2$ in feed | $O_2$ in prod. | Calc. feed flow (sccm) | Prod. flow (sccm) | ion transport temp.(°C) | Avg flux (sccm/cm$^2$) |
|---|---|---|---|---|---|---|
| **Results for dual-phase ion transport tube** | | | | | | |
| **A. Uncoated dual-phase ion transport tube (Example 6):** | | | | | | |
| 17.5 | 20.9 % | 5.57 % | 209 | 175 | 1034 | 1.9 |
| **B. Dual-phase ion transport tube with a 20 m porous coating of 1 m single-phase ion transport granules (Example 7):** | | | | | | |
| 17.8 | 20.9 % | 5.34 % | 790 | 660 | 1062 | 7.3 |
| **C. Dual-phase ion transport tube with a 20 m porous coating of 1 m dual-phase ion transport granules (Example 8):** | | | | | | |
| 37.7 | 20.9 % | 12.92 % | 2884 | 2620 | 1017 | 7.0 |

Note that in each example the ion transport tube with the mixed conductor and electronic conductor porous layer, the oxygen flux increased nearly four times that of the dense uncoated ion transport tube.

### Example 9

A dual phase disc was prepared. Both surfaces of sintered discs were then polished to obtain a thickness of 0.9 mm. The oxygen permeation rate was measured on the disc at 900°C under an air/helium gradient. The disc specimen was sealed in an alumina test cell with Ag paste. A HP 5890 Gas Chromatograph and oxygen analyzer were used to analyze the gas compositions and calculate the oxygen fluxes. The flux results (in sccm/cm$^2$) at 900°C are summarized in Table IV.

### Example 10

Example 10 presents another embodiment of the electrolyte membrane of the present invention. A dual phase disc similar to that of Example 9 was prepared and was polished to obtain a thickness of 0.6 mm.
A few drops of a LSFCCM ion transport material similar to that from Example 5 were deposited onto the surface of the disc which was fixed on a spinning coater. A spinning speed of 3500 rpm for 20 seconds was used for the deposition of modification layer. After spin-coating, the as-deposited coating of LSFCCM ion transport material on the disc was dried on a hot plate at 80°C for 5 minutes, then transferred to a ceramic-top hot plate and heated at approximately 300°C for at least 5 minutes. The entire coating and drying process was repeated until a 1 μm LSFCCM film formed on the membrane surface. The dual phase disc was then tested in the same manner as described in Example 9.

With the surface modification (on air side) the oxygen flux increased about three fold under an air/helium gradient indicating that surface exchange kinetics on the air is enhanced by increasing the surface area for oxygen dissociation via the surface modification.

Table IV:

| Results for dual-phase disc | | | | | | |
|---|---|---|---|---|---|---|
| Disc area (cm$^2$) | Disc thickness (mm) | Feed flow (sccm). | Purge flow (sccm) | ionic transport. temp. (°C) | $O_2$ flux (sccm/ cm$^2$) | Corr. $O_2$ flux (sccm/cm$^2$) |
| Uncoated dual-phase disc (Example 9): | | | | | | |
| 3.9 | 0.9 | 500 | 500 | 900 | 0.07 | (0.06)* |
| Dual-phase disc with a 1mm porous coating LSFCCM on air side (Example 10): | | | | | | |
| 3.9 | 0.6 | 500 | 500 | 900 | 0.26 | (0.16)* |

* (Flux corrected to 1mm thick membrane)

For example, suitable first phase materials may conduct proton ions instead of or together with oxygen ions for applications involving hydrogen.

**Claims**

1. A solid electrolyte ion transport membrane having a first surface and a second surface, the membrane comprising:

   a matrix material capable of conducting at least one type of ion; and
   at least one electronically conductive constituent which is physically distinguishable from said matrix material and is present in a manner which precludes continuous electronic conductivity through the constituent accross the membrane,

   **characterized in that**

   said electronically conductive constituent is randomly distributed and is less than 30 vol.% to ensure that said constituent is present in a manner below the percolation limit of electrons across the membrane.

2. The membrane of claim 1 wherein said matrix material is a mixed conductor which exhibits both electronic and oxygen ion conductivity.

3. The membrane of claim 1, wherein said constituent is selected from the group consisting of silver, palladium, platinum, gold, rhodium, ruthenium, tungsten, tantalum, titanium, nickel, silicon, lanthanide, yttrium, copper, cobalt, chromium, vanadium, zirconium, tantalum, manganese, molybdenum, niobium, aluminum, iron or mixtures thereof.

4. The membrane of claim 1, further comprising a porous coating disposed on at least one the first and second surfaces of the membrane, wherein the porous coating comprises a mixed conductor material which exhibits both electronic and oxygen ion conductivity.

5. The membrane of claim 1, further comprising a porous coating disposed on at least one the first and second surfaces of the membrane, wherein at least one of the membrane and the porous coating is disposed on a porous support for enhancing the structural stability of the membrane.

**EP 0 850 679 B1**

**Patentansprüche**

1. Feststoffelektrolytionentransportmembran mit einer ersten Oberfläche und einer zweiten Oberfläche sowie mit:

   einem Matrixmaterial, welches in der Lage ist, mindestens einen Ionentyp zu leiten; und

   mindestens einem elektrisch leitenden Bestandteil, der physikalisch von dem Matrixmaterial unterscheidbar ist und in einer Weise vorliegt, welche eine kontinuierliche elektrische Leitfähigkeit durch den Bestandteil hindurch über die Membran ausschließt,

   **dadurch gekennzeichnet, dass**

   der elektronisch leitende Bestandteil zufällig verteilt ist und weniger als 30 Vol.% ausmacht, um sicherzustellen, dass der Bestandteil in einer Weise unterhalb der Perkolationsgrenze von Elektronen über die Membran vorliegt.

2. Membran gemäß Anspruch 1, wobei es sich bei dem Matrixmaterial um ein gemischt leitendes Material handelt, welches sowohl elektronische Leitfähigkeit als auch Sauerstoffionenleitfähigkeit aufweist.

3. Membran gemäß Anspruch 1, wobei der Bestandteil aus der aus Silber, Palladium, Platin, Gold, Rhodium, Rhutenium, Wolfram, Tantal, Titan, Nickel, Silizium, Lantanoidelementen, Ytrium, Kupfer, Kobalt, Chrom, Vanadium, Zirkonium, Tantal, Mangan, Molybdän, Niob, Aluminium, Eisen oder Gemischen daraus bestehenden Gruppe ausgewählt ist.

4. Membran gemäß Anspruch 1, ferner versehen mit einer auf die erste und/oder zweite Oberfläche der Membran aufgebrachten porösen Beschichtung, welche ein gemischt leitendes Material aufweist, welches sowohl elektronische als auch Sauerstoffionenleitfähigkeit aufweist.

5. Membran gemäß Anspruch 1, ferner versehen mit einer auf der ersten und/oder zweiten Oberfläche der Membran aufgebrachten porösen Beschichtung, wobei die Membran und/oder die poröse Beschichtung auf einem porösen Träger aufgebracht ist bzw. sind, um die strukturelle Stabilität der Membran zu erhöhen.


**Revendications**

1. Membrane transporteuse d'ions à électrolyte solide ayant une première surface et une seconde surface, la membrane comprenant :

   une matière de matrice capable de conduire au moins un type d'ion ; et
   au moins un constituant conducteur électronique qui est physiquement distinguable de ladite matière de matrice et qui est présent d'une manière qui exclut une conductivité électronique continue passant par le constituant à travers la membrane,

   **caractérisée en ce que**
   ledit constituant conducteur électronique est distribué statistiquement et représente moins de 30 % en volume pour assurer que ledit constituant soit présent au-dessous de la limite de cheminement des électrons à travers la membrane.

2. Membrane selon la revendication 1, dans laquelle ladite matière de matrice est un conducteur mixte qui présente à la fois une conductivité électronique et une conductivité d'ions oxygène.

3. Membrane selon la revendication 1, dans laquelle ledit constituant est choisi dans le groupe formé par l'argent, le palladium, le platine, l'or, le rhodium, le ruthénium, le tungstène, le tantale, le titane, le nickel, le silicium, un lanthanide, l'yttrium, le cuivre, le cobalt, le chrome, le vanadium, le zirconium, le tantale, le manganèse, le molybdène, le niobium, l'aluminium, le fer ou leurs mélanges.

4. Membrane selon la revendication 1, comprenant de plus un revêtement poreux disposé sur au moins l'une des première et seconde surfaces de la membrane, dans laquelle le revêtement poreux comprend une matière à conduction mixte qui présente à la fois une conductivité électronique et une conductivité d'ions oxygène.

5. Membrane selon la revendication 1, comprenant de plus un revêtement poreux disposé sur au moins l'une des première et seconde surfaces de la membrane, dans laquelle au moins l'un de la membrane et du revêtement poreux est disposé sur un support poreux servant à augmenter la stabilité structurale de la membrane.

0 wt% Ag/Pd

# FIG. 1A

5 wt% Ag/Pd

# FIG. 1B

10 wt% Ag/Pd

# FIG. 1C

20 wt% Ag/Pd

# FIG. 1D

FIG. 2

FIG. 3

18

FIG. 4

FIG. 5

# FIG. 6A

# FIG. 6B

FIG. 7

FIG. 8